# FASCICULE DE BREVET EUROPEEN

(11) **EP 4 344 591 B1**
(45) Date de publication et mention de la délivrance du brevet: **30.04.2025**
(21) Numéro de dépôt: 23200547.0
(22) Date de dépôt: 28.09.2023
(51) Int. Cl.: A47J 37/06

(54) **APPAREIL DE CUISSON AVEC POIGNEE DE PREHENSION ROTATIVE**
GARGERÄT MIT DREHBAREM GRIFF
COOKING APPLIANCE WITH ROTATABLE GRIP HANDLE

(30) Priorité: 30.09.2022 FR 2210018
(43) Date de publication de la demande: 03.04.2024
(73) Titulaire: SEB S.A., 69130 Ecully (FR)
(72) Inventeur: ROBIN, Jean-Philippe, 69134 ECULLY CEDEX (FR)
(74) Mandataire: SEB Développement

(56) Documents cités:
- FR-A1- 3 050 914
- US-A1- 2007 119 442
- US-B2- 10 321 784
- US-B2- 9 314 133

## Description

### Domaine technique

La présente invention concerne de manière générale un appareil de cuisson pour la cuisson de produits alimentaires, et en particulier un appareil de cuisson électrique pouvant fonctionner selon un mode grill et un mode barbecue.

### Etat de la technique

Il est connu de l'art antérieur d'utiliser un appareil de cuisson électrique permettant deux modes de cuisson différents, à savoir un premier mode de cuisson dit mode « grill » et un deuxième mode de cuisson dit mode « barbecue ». Un tel appareil de cuisson électrique comporte en général :
- une première structure comportant une première plaque de cuisson ;
- une deuxième structure comportant une deuxième plaque de cuisson, la deuxième structure étant montée articulée par rapport à la première structure autour d'un axe de pivotement ; et
- une interface utilisateur qui est prévue sur la première structure et qui est configurée pour permettre à un utilisateur de sélectionner au moins un paramètre de fonctionnement de l'appareil de cuisson électrique.

L'appareil de cuisson électrique tel que connu dans l'art antérieur peut alternativement occuper le mode « grill » dans lequel un aliment est destiné à être enserré et cuit entre les première et deuxième plaques de cuisson, et le mode « barbecue » dans lequel les première et deuxième plaques de cuisson sont écartées à 180° de sorte à être sensiblement dans un même plan, ledit plan étant généralement horizontal lorsque l'appareil de cuisson repose sur une surface horizontale.

L'appareil de cuisson tel que décrit dans l'art antérieur permet de façon avantageuse d'utiliser un seul appareil électroménager afin de répondre à deux fonctions distinctes : celle de grill alimentaire, et celle de barbecue.

Cependant, l'intégration de l'interface utilisateur dans la première structure, c'est-à-dire sur la partie inférieure de l'appareil de cuisson électrique, présente l'inconvénient d'une ergonomie perfectible en raison de l'accès physique restreint ainsi que de la visibilité limitée de l'utilisateur sur l'interface utilisateur. Egalement, une telle disposition de l'interface utilisateur empêche de pourvoir réaliser une collecte des jus de cuisson depuis une face frontale de la première structure.

L'intégration de l'interface utilisateur sur une zone plus accessible, telle que sur la deuxième structure, est rendue complexe en raison de la cohabitation des deux modes d'utilisation qui impose à la deuxième structure d'occuper deux orientations décalées à 180° selon le mode d'utilisation de l'appareil de cuisson électrique. Le document US2007/119442A1 divulgue un appareil de cuisson de l'art antérieur.

### Résumé de l'invention

Le problème technique à la base de l'invention consiste notamment à fournir un appareil de cuisson permettant la cuisson de produits alimentaires dans une configuration grill mais également dans une configuration barbecue, tout en étant ergonomique et simple d'utilisation et tout en permettant éventuellement une collecte des jus de cuisson depuis une face frontale de la première structure.

A cet effet, la présente invention concerne un appareil de cuisson pour la cuisson de produits alimentaires, l'appareil de cuisson comportant :
- une première structure comportant un premier module de cuisson comportant une première plaque de cuisson,
- une deuxième structure comportant un deuxième module de cuisson comportant une deuxième plaque de cuisson, la deuxième structure comportant en outre une poignée de préhension qui comporte une partie de manipulation configurée pour être manipulée par un utilisateur,

- une liaison pivot reliant la deuxième structure à la première structure et configurée pour permettre un pivotement de la deuxième structure par rapport à la première structure autour d'un axe de pivotement et entre une position de fermeture dans laquelle la première plaque de cuisson et la deuxième plaque de cuisson présentent un écartement minimal, et une position d'ouverture maximale dans laquelle la première plaque de cuisson et la deuxième plaque de cuisson présentent un écartement maximal lorsque l'appareil de cuisson repose sur une surface d'appui,
- une interface utilisateur disposée sur la partie de manipulation, et
- une unité de commande configurée pour commander le fonctionnement de l'appareil de cuisson,

l'appareil de cuisson présentant un premier mode d'utilisation, dit mode grill, dans lequel un aliment est destiné à être enserré entre les première et deuxième plaques de cuisson, et un deuxième mode d'utilisation, dit mode barbecue, dans lequel chacune des première et deuxième plaques de cuisson est apte à supporter et cuire un aliment respectif,
caractérisé en ce que la partie de manipulation, qui porte l'interface utilisateur, est mobile par rapport au deuxième module de cuisson entre au moins une première position d'utilisation qui est dédiée au premier mode d'utilisation et dans laquelle l'interface utilisateur est accessible pour un utilisateur lorsque l'appareil de cuisson est dans le premier mode d'utilisation, et une deuxième position d'utilisation qui est dédiée au deuxième mode d'utilisation et dans laquelle l'interface utilisateur est accessible pour un utilisateur lorsque l'appareil de cuisson est dans le deuxième mode d'utilisation.

L'appareil de cuisson peut en outre présenter une ou plusieurs des caractéristiques suivantes, prises seules ou en combinaison.

Selon un mode de réalisation de l'invention, la deuxième structure occupe la position d'ouverture maximale lorsque l'appareil de cuisson est dans le deuxième mode d'utilisation.

Selon un mode de réalisation de l'invention, l'appareil de cuisson est configuré de telle sorte que la première plaque de cuisson et la deuxième plaque de cuisson définissent un premier angle d'inclinaison compris entre 150 et 200°, avantageusement entre 170 et 190° et par exemple d'environ 180°, lorsque la deuxième structure occupe la position d'ouverture maximale.

Selon un mode de réalisation de l'invention, la partie de manipulation est allongée et s'étend selon un axe d'extension sensiblement parallèle à l'axe de pivotement.

Selon un mode de réalisation de l'invention, l'axe de pivotement est sensiblement horizontal lorsque l'appareil de cuisson repose sur une surface horizontale.

Selon un mode de réalisation de l'invention, la partie de manipulation comporte une façade pourvue d'une surface principale qui est sensiblement plane et sur laquelle est prévue l'interface utilisateur.

Selon un mode de réalisation de l'invention, l'appareil de cuisson est configuré de telle sorte que la surface principale est inclinée d'un angle d'inclinaison compris entre 30° et 60°, et avantageusement entre 40° et 50°, par rapport à un plan vertical, lorsque l'appareil de cuisson repose sur une surface horizontale, que la deuxième structure est dans la position de fermeture et que la partie de manipulation est dans la première position d'utilisation.

Selon un mode de réalisation de l'invention, l'appareil de cuisson est configuré de telle sorte que la surface principale est inclinée d'un angle d'inclinaison compris entre 30° et 60°, et avantageusement entre 40° et 50°, par rapport à un plan vertical, lorsque l'appareil de cuisson repose sur une surface horizontale, que la deuxième structure est dans la position d'ouverture maximale et que la partie de manipulation est dans la deuxième position d'utilisation.

Selon un mode de réalisation de l'invention, la partie de manipulation est configurée pour s'étendre sensiblement horizontalement lorsque l'appareil de cuisson repose sur une surface horizontale.

Selon un mode de réalisation de l'invention, la partie de manipulation délimite un logement interne dans lequel est logé une carte électronique associée à l'interface utilisateur.

Selon un mode de réalisation de l'invention, la partie de manipulation comporte un boîtier auquel est fixée la façade, le boîtier et la façade délimitant le logement interne.

Selon un mode de réalisation de l'invention, la partie de manipulation est montée mobile en rotation autour d'un axe de rotation.

Selon un mode de réalisation de l'invention, la première position d'utilisation et la deuxième position d'utilisation sont décalées angulairement l'une de l'autre d'environ 90°.

Selon un mode de réalisation de l'invention, l'axe de rotation est sensiblement parallèle à l'axe de pivotement.

Selon un mode de réalisation de l'invention, la deuxième structure comporte au moins un bras de liaison relié à la liaison pivot, la partie de manipulation étant supportée par l'au moins un bras de liaison et étant montée mobile en rotation par rapport à l'au moins un bras de liaison et autour de l'axe de rotation.

Selon un mode de réalisation de l'invention, la deuxième structure comporte deux bras de liaison reliés à la liaison pivot et configurés pour s'étendre latéralement de part et d'autre du deuxième module de cuisson, la partie de manipulation étant supportée par les deux bras de liaison et étant montée mobile en rotation par rapport aux deux bras de liaison et autour de l'axe de rotation.

Selon un mode de réalisation de l'invention, la poignée de préhension comporte les deux bras de liaison et présente une forme générale de U.

Selon un mode de réalisation de l'invention, l'au moins un bras de liaison comporte une portion de support qui est globalement cylindrique et la partie de manipulation comporte une portion de montage pourvue d'un logement de réception, la portion de support étant reçue dans le logement de réception et étant montée mobile en rotation par rapport à la portion de montage autour de l'axe de rotation. De façon avantageuse, la portion de support est tubulaire et comporte un passage central configuré pour autoriser le passage d'un câble d'alimentation électrique apte à alimenter électriquement l'interface utilisateur, ou plus particulièrement la carte électronique associée à l'interface utilisateur.

Selon un mode de réalisation de l'invention, le passage central est centré sur l'axe de rotation.

Selon un mode de réalisation de l'invention, le passage central est également configuré pour autoriser le passage d'au moins un câble de liaison reliant l'interface utilisateur à l'unité de commande.

Selon un mode de réalisation de l'invention, l'appareil de cuisson comporte au moins une liaison pivot additionnelle configurée pour relier le deuxième module de cuisson aux deux bras de liaison, et pour autoriser une rotation du deuxième module de cuisson par rapport aux deux bras de liaison autour d'un axe de pivotement additionnel.

Selon un mode de réalisation de l'invention, l'axe de pivotement additionnel est sensiblement parallèle à l'axe de pivotement.

Selon un mode de réalisation de l'invention, l'appareil de cuisson comporte en outre un système d'indexage configuré de telle sorte que chacune des première et deuxième positions d'utilisation est stable.

Selon un mode de réalisation de l'invention, le système d'indexage comporte au moins deux évidements d'indexage prévus sur l'un parmi la partie de manipulation et un bras de liaison, et au moins un organe d'indexage prévu sur l'autre parmi la partie de manipulation et le bras de liaison, l'au moins un organe d'indexage étant configuré pour coopérer avec un évidement d'indexage respectif lorsque la partie de manipulation occupe respectivement la première position d'utilisation ou la deuxième position d'utilisation.

Selon un mode de réalisation de l'invention, les évidements d'indexage sont répartis autour de l'axe de rotation.

Selon un mode de réalisation de l'invention, l'au moins un organe d'indexage est formé par une bille d'indexage. De façon avantageuse, la bille d'indexage est montée coulissante dans une partie de réception tubulaire qui est prévue sur la partie de manipulation ou le bras de liaison.

Selon un mode de réalisation de l'invention, le système d'indexage comporte au moins un élément de sollicitation configuré pour solliciter la bille d'indexage vers une position d'indexage.

Selon un mode de réalisation de l'invention, le système d'indexage comporte plusieurs organes d'indexage répartis autour de l'axe de rotation.

Selon un mode de réalisation de l'invention, l'interface utilisateur est configurée pour afficher au moins un paramètre d'affichage selon une première orientation lorsque l'appareil de cuisson est dans le premier mode d'utilisation et que la partie de manipulation est dans la première position d'utilisation, et pour afficher l'au moins un paramètre d'affichage selon une deuxième orientation qui est différente de la première orientation, et par exemple inversée, lorsque l'appareil de cuisson est dans le deuxième mode d'utilisation et que la partie de manipulation est dans la deuxième position d'utilisation.

Selon un mode de réalisation de l'invention, l'appareil de cuisson comporte en outre un contact électrique configuré pour occuper un premier état lorsque l'appareil de cuisson est dans le premier mode d'utilisation, et configuré pour occuper un deuxième état lorsque l'appareil de cuisson est dans le deuxième mode d'utilisation.

Selon un mode de réalisation de l'invention, le contact électrique est situé dans la première structure, et par exemple dans un pied arrière de la première structure.

Selon un mode de réalisation de l'invention, le contact électrique est situé dans l'au moins un bras de liaison.

Selon un mode de réalisation de l'invention, l'appareil de cuisson comporte un dispositif d'actionnement configuré pour déplacer le contact électrique dans le premier état lorsque la deuxième structure est pivotée, depuis la position d'ouverture maximale, en direction de la position de fermeture et atteint une première position prédéterminée, et pour déplacer le contact électrique dans le deuxième état lorsque la deuxième structure est pivotée, depuis la position de fermeture, en direction de la position d'ouverture maximale et atteint une deuxième position prédéterminée.

Selon un mode de réalisation de l'invention, les première et deuxième positions prédéterminées sont identiques ou différentes.

Selon un mode de réalisation de l'invention, le dispositif d'actionnement comporte un organe d'actionnement, tel qu'un doigt d'actionnement par exemple, mobile entre une position d'actionnement dans laquelle l'organe d'actionnement est configuré pour activer le contact électrique et une position de libération dans laquelle l'organe d'actionnement est configuré pour désactiver le contact électrique.

Selon un mode de réalisation de l'invention, l'organe d'actionnement est solidaire en pivotement de l'au moins un bras de liaison, et est par exemple prévu sur l'au moins un bras de liaison.

Selon un mode de réalisation de l'invention, l'organe d'actionnement est mobile en translation.

Selon un mode de réalisation de l'invention, l'organe d'actionnement est mobile en rotation.

Selon un mode de réalisation de l'invention, le dispositif d'actionnement comporte également une came configurée pour déplacer l'organe d'actionnement entre la position d'actionnement et la position de libération lorsque la deuxième structure atteint la première position prédéterminée ou la deuxième position prédéterminée.

Selon un mode de réalisation de l'invention, l'interface utilisateur est configurée pour afficher l'au moins un paramètre d'affichage selon la première orientation lorsque le contact électrique occupe le premier état, et est configurée pour afficher l'au moins un paramètre d'affichage selon la deuxième orientation lorsque le contact électrique occupe le deuxième état.

Selon un mode de réalisation de l'invention, lorsque la première structure repose sur une surface horizontale et que la deuxième structure est dans la position d'ouverture maximale, alors la poignée de préhension est en contact avec ladite surface horizontale.

Selon un mode de réalisation de l'invention, la deuxième structure est apte à occuper une position d'ouverture intermédiaire qui est stable et située entre la position de fermeture et la position d'ouverture maximale.

Selon un mode de réalisation de l'invention, l'appareil de cuisson est configuré de telle sorte que la première plaque de cuisson et la deuxième plaque de cuisson définissent un deuxième angle d'inclinaison compris entre 90 et 120° lorsque la deuxième structure occupe la position d'ouverture intermédiaire.

Selon un mode de réalisation de l'invention, la première plaque de cuisson est configurée pour être inclinée vers le bas et vers une face avant de la première structure lorsque l'appareil de cuisson repose sur la surface horizontale.

Selon un mode de réalisation de l'invention, l'appareil de cuisson comporte en outre un bac de collecte de jus de cuisson configuré pour collecter des jus de cuisson provenant au moins de la première plaque de cuisson, le bac de collecte de jus de cuisson étant disposé au moins en partie sous le premier module de cuisson.

Selon un mode de réalisation de l'invention, la première plaque de cuisson comporte une partie de déversement frontale qui est prévue sur un bord avant de la première plaque de cuisson et qui est située verticalement à l'aplomb d'une partie avant du bac de collecte de jus de cuisson, la partie de déversement frontale étant configurée pour permettre un écoulement par gravité des jus de cuisson provenant de la première plaque de cuisson dans le bac de collecte de jus de cuisson.

Selon un mode de réalisation de l'invention, l'appareil de cuisson comporte également une chaine cinématique reliant mécaniquement la partie de manipulation à la liaison pivot, la chaine cinématique étant configurée de manière à déplacer la partie de manipulation entre les première et deuxième positions d'utilisation en fonction de la position de la deuxième structure par rapport à la première structure.

Selon un mode de réalisation de l'invention, la chaine cinématique est prévue au moins partiellement dans l'au moins un bras de liaison.

Selon un mode de réalisation de l'invention, la chaine cinématique comporte au moins un élément d'entrainement, tel qu'une courroie par exemple.

### Brève description des figures

La présente invention sera bien comprise à l'aide de la description qui suit en références aux figures annexées, dans lesquelles des signes de références identiques correspondant à des éléments structurellement et / ou fonctionnellement identiques ou similaires.
[Fig 1] est une vue en perspective de côté d'un appareil de cuisson selon un mode de réalisation de l'invention et dans un premier mode d'utilisation ;
[Fig 2] est une vue en perspective de côté de l'appareil de cuisson de la figure 1 dans un deuxième mode d'utilisation ;
[Fig 3] est une vue éclatée en perspective d'une poignée de préhension de l'appareil de cuisson de la figure 1 ;
[Fig 4] est une vue en coupe d'une partie de manipulation de l'appareil de cuisson de la figure 1 ;
[Fig 5] est une vue partielle en perspective arrière de l'appareil de cuisson de la figure 1 montrant plus particulièrement un contact électrique occupant un premier état ;
[Fig 6] est une vue partielle en perspective arrière de l'appareil de cuisson de la figure 1 montrant le contact électrique dans un deuxième état ;
[Fig 7] est une vue de côté de l'appareil de cuisson de la figure 1 dans le premier mode d'utilisation et selon une variante du mode de réalisation ;
[Fig 8] est une vue de côté de l'appareil de cuisson de la figure 1 dans le deuxième mode d'utilisation et selon une variante du mode de réalisation.

### Description détaillée

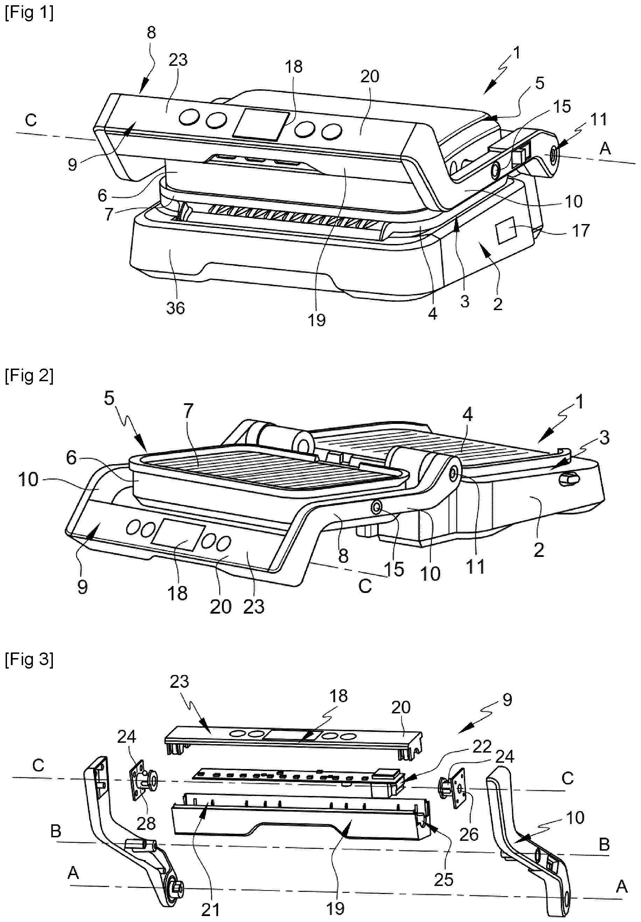

Les figures 1 à 6 représentent un appareil de cuisson 1 selon un mode réalisation de l'invention. L'appareil de cuisson 1 est configuré pour la cuisson d'aliments, tel que de la viande, du poisson, des légumes ou d'autres produits alimentaires.

L'appareil de cuisson 1 comporte une première structure 2 qui comporte un premier module de cuisson 3 qui comporte lui-même une première plaque de cuisson 4 et un premier élément chauffant (non représenté sur les figures) configuré pour chauffer la première plaque de cuisson 4, et une deuxième structure 5 qui comporte un deuxième module de cuisson 6 qui comporte lui-même une deuxième plaque de cuisson 7 et un deuxième élément chauffant (non visible sur les figures) configuré pour chauffer la deuxième plaque de cuisson 7. La première plaque de cuisson 4 est configurée pour être inclinée vers le bas et vers une face avant de la première structure 2 lorsque l'appareil de cuisson 1 repose sur une surface horizontale.

L'appareil de cuisson 1 présente un premier mode d'utilisation, dit mode grill, dans lequel un aliment est destiné à être enserré entre les première et deuxième plaques de cuisson 4, 7, et un deuxième mode d'utilisation, dit mode barbecue, dans lequel chacune des première et deuxième plaques de cuisson 4, 7 est apte à supporter et cuire un aliment respectif.

La deuxième structure 5 comporte en outre une poignée de préhension 8 configurée pour supporter le deuxième module de cuisson 6. La poignée de préhension 8 présente une forme de U, et comporte une partie de manipulation 9 configurée pour être manipulée par un utilisateur, ainsi que deux bras de liaison 10 latéraux configurés pour s'étendre latéralement de part et d'autre du deuxième module de cuisson 6 et pour supporter la partie de manipulation 9. Les deux bras de liaison 10 sont reliés à une liaison pivot 11.

La deuxième structure 5 est reliée à la première structure 2 par la liaison pivot 11 qui définit un axe de pivotement A. La liaison pivot 11 est configurée de telle sorte que la deuxième structure 5 est montée articulée par rapport à la première structure 2 et est déplaçable entre une position de fermeture dans laquelle la première plaque de cuisson 4 et la deuxième plaque de cuisson 7 présentent un écartement minimal, et une position d'ouverture maximale dans laquelle la première plaque de cuisson 4 et la deuxième plaque de cuisson 7 présentent un écartement maximal lorsque l'appareil de cuisson 1 repose sur une surface d'appui SA. La deuxième structure 5 occupe la position d'ouverture maximale lorsque l'appareil de cuisson 1 est dans le deuxième mode d'utilisation.

La première plaque de cuisson 4 et la deuxième plaque de cuisson 7 définissent un premier angle d'inclinaison compris entre 150 et 200°, avantageusement entre 170 et 190° et par exemple d'environ 180°, lorsque la deuxième structure 5 occupe la position d'ouverture maximale. Avantageusement, lorsque la première structure 2 repose sur une surface horizontale et que la deuxième structure 5 est dans la position d'ouverture maximale, alors la poignée de préhension 8 est en contact avec ladite surface horizontale.

De façon avantageuse, la deuxième structure 5 est configurée pour occuper :
- une position d'ouverture intermédiaire qui est stable et située entre la position de fermeture et la position d'ouverture maximale et dans laquelle la première plaque de cuisson 4 et la deuxième plaque de cuisson 7 définissent un deuxième angle d'inclinaison compris entre 90 et 120°, et
- une pluralité de positions de cuisson situées entre la position de fermeture et la position d'ouverture intermédiaire et dans chacune desquelles un aliment peut être enserré entre la première plaque de cuisson 4 et la deuxième plaque de cuisson 7.

Avantageusement, la première plaque de cuisson 4 et la deuxième plaque de cuisson 7 sont sensiblement parallèles lorsque la deuxième structure 5 est en position d'ouverture maximale, ceci afin de proposer à l'utilisateur une utilisation de l'appareil de cuisson 1 qui est assimilable à un barbecue électrique.

Pour des raisons évidentes de praticité, la première structure 2 comprend également des pieds 14 configurés pour reposer sur une surface d'appui SA plane, tel qu'un plan de travail.

Selon le mode de réalisation de l'invention représenté sur les figures, l'appareil de cuisson 1 comporte une liaison pivot additionnelle 15 qui est configurée pour relier le deuxième module de cuisson 6 aux deux bras de liaison 10, et pour autoriser une rotation du deuxième module de cuisson 6 par rapport aux deux bras de liaison 10 autour d'un axe de pivotement additionnel B qui est sensiblement parallèle à l'axe de pivotement A. Avantageusement, la liaison pivot additionnelle 15 permet de positionner le deuxième module de cuisson 6 selon l'orientation voulue, et en général sensiblement parallèlement au premier module de cuisson 3 lorsque le deuxième module de cuisson 6 est dans l'une des positions de cuisson. En d'autres termes, le deuxième module de cuisson 6 est monté pivotant par rapport à la poignée de préhension 8.

L'appareil de cuisson 1 comporte également une unité de commande 17 configurée pour commander le fonctionnement de l'appareil de cuisson 1. L'unité de commande 17 peut par exemple être disposée dans la poignée de préhension 8 et notamment dans la partie de manipulation 9, ou encore dans la première structure 2.

Selon le mode de réalisation présenté sur les figures 1 à 8, la partie de manipulation 9, qui présente notamment une interface utilisateur 18, est montée mobile en rotation par rapport aux deux bras de liaison 10 autour d'un axe de rotation C et entre au moins une première position d'utilisation et une deuxième position d'utilisation. La première position d'utilisation est dédiée au premier mode d'utilisation et permet à l'interface utilisateur 18 d'être accessible pour un utilisateur lorsque l'appareil de cuisson 1 est dans le premier mode d'utilisation, et la deuxième position d'utilisation est dédiée au deuxième mode d'utilisation et permet à l'interface utilisateur 18 d'être accessible pour l'utilisateur lorsque l'appareil de cuisson 1 est dans le deuxième mode d'utilisation. La première position d'utilisation et la deuxième position d'utilisation sont avantageusement décalées angulairement l'une de l'autre d'environ 90°.

La partie de manipulation 9 est allongée et s'étend selon l'axe de rotation C qui est sensiblement parallèle à l'axe de pivotement A ; qui est par ailleurs, sensiblement horizontal lorsque l'appareil de cuisson 1 repose sur une surface horizontale.

La partie de manipulation 9 comporte également un boîtier 19 et une façade 20 fixée au boîtier 19. Le boîtier 19 et la façade 20 délimitent un logement interne 21 dans lequel est logée une carte électronique 22 associée l'interface utilisateur 18. La façade 20 est pourvue d'une surface principale 23 qui est sensiblement plane et sur laquelle est prévue l'interface utilisateur 18.

Selon le mode de réalisation de l'invention représenté sur les figures, l'appareil de cuisson 1 est configuré de telle sorte que la surface principale 23 est inclinée d'un angle d'inclinaison compris entre 30° et 60°, et avantageusement entre 40° et 50°, par rapport à un plan vertical, lorsque l'appareil de cuisson 1 repose sur une surface horizontale, que la deuxième structure 5 est dans la position de fermeture et que la partie de manipulation 9 est dans la première position d'utilisation. Egalement, l'appareil de cuisson 1 est configuré de telle sorte que la surface principale 23 est inclinée d'un angle d'inclinaison compris entre 30° et 60°, et avantageusement entre 40° et 50°, par rapport à un plan vertical, lorsque l'appareil de cuisson 1 repose sur une surface horizontale, que la deuxième structure 5 est dans la position d'ouverture maximale et que la partie de manipulation 9 est dans la deuxième position d'utilisation.

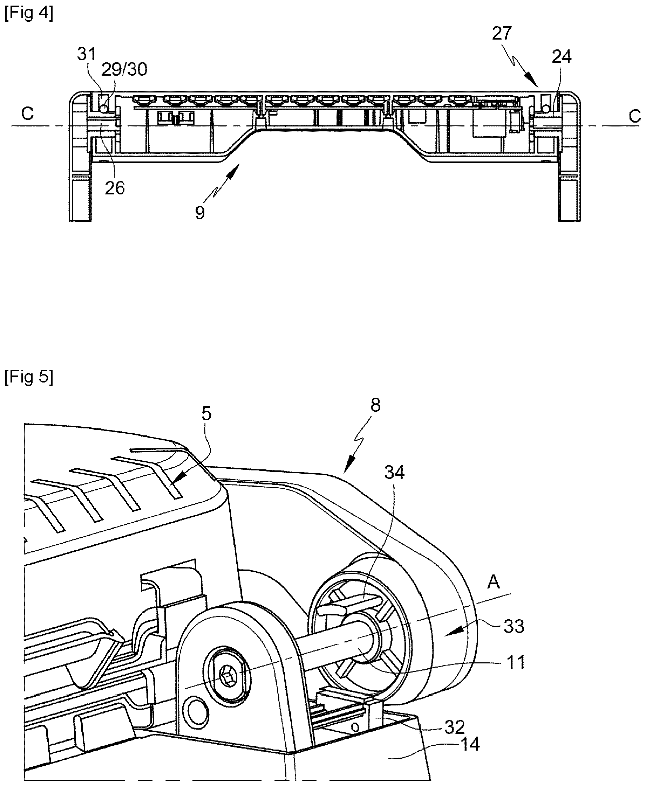

Comme montré plus particulièrement sur les figures 3 et 4, les bras de liaison 10 comportent chacun une portion de support 24 qui est globalement cylindrique, et la partie de manipulation 9 comporte deux portions de montage 25 pourvues chacune d'un logement de réception. La portion de support 24 de chaque bras de liaison 10 est reçue dans le logement de réception respectif et est montée mobile en rotation par rapport à la portion de montage 25 respective autour de l'axe de rotation C. De façon avantageuse, chaque portion de support 24 est tubulaire et comporte un passage central 26 qui est centré sur l'axe de rotation C. Au moins l'un des passages centraux 26 est configuré pour autoriser le passage d'un câble d'alimentation électrique apte à alimenter électriquement l'interface utilisateur 18, ou plus particulièrement la carte électronique 22 associée à l'interface utilisateur 18. Le passage central 26 est également configuré pour autoriser le passage d'au moins un câble de liaison reliant la carte électronique 22, associée à l'interface utilisateur 18, à l'unité de commande 17.

Comme montré également sur les figures 3 et 4, l'appareil de cuisson 1 comporte en outre un système d'indexage 27 configuré de telle sorte que chacune des première et deuxième positions d'utilisation est stable. Le système d'indexage 27 comporte par exemple deux évidements d'indexage 28 prévus sur chacun des deux bras de liaison 10, et un organe d'indexage 29 prévu sur chacune des portions d'extrémité de la partie de manipulation 9. Les évidements d'indexage 28 sont répartis autour de l'axe de rotation C. Chacun des organes d'indexage 29 est configuré pour coopérer avec un évidement d'indexage 28 respectif lorsque la partie de manipulation 9 occupe la première position d'utilisation et avec un évidement d'indexage 28 respectif lorsque la partie de manipulation 9 occupe la deuxième position d'utilisation.

Selon le mode de réalisation représenté sur les figures, chacun des organes d'indexage 29 est formé par une bille d'indexage 30. De façon avantageuse, chacune des billes d'indexage 30 est montée coulissante dans une partie de réception tubulaire 31 qui est prévue sur la portion d'extrémité respective de la partie de manipulation 9. Egalement, le système d'indexage 27 comporte deux éléments de sollicitation (non représentés sur les figures) associés chacun à un organe d'indexage 29 respectif. Chaque élément de sollicitation est avantageusement configuré pour solliciter la bille d'indexage 30 respective vers une position d'indexage.

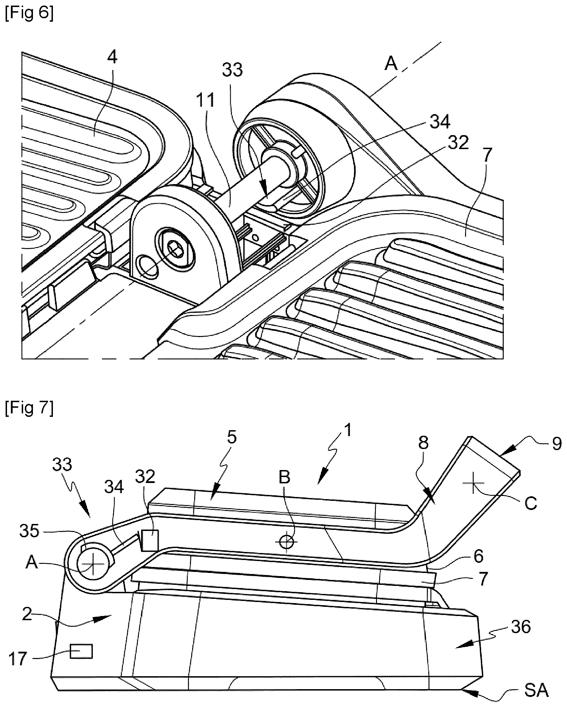

Comme représenté plus particulièrement sur les figures 5 et 6, l'appareil de cuisson 1 comporte en outre un contact électrique 32 configuré pour occuper un premier état lorsque l'appareil de cuisson 1 est dans le premier mode d'utilisation, et configuré pour occuper un deuxième état lorsque l'appareil de cuisson 1 est dans le deuxième mode d'utilisation. Selon le mode de réalisation représenté sur les figures 5 et 6, le contact électrique 32 est situé dans la première structure 2, et par exemple dans un pied 14 arrière de la première structure 2.

Comme montré plus particulièrement sur les figures 5 à 8, l'appareil de cuisson 1 comporte également un dispositif d'actionnement 33 configuré pour déplacer le contact électrique 32 dans le premier état lorsque la deuxième structure 5 est pivotée, depuis la position d'ouverture maximale, en direction de la position de fermeture et atteint une première position prédéterminée. Le dispositif d'actionnement 33 est également configuré pour déplacer le contact électrique 32 dans le deuxième état lorsque la deuxième structure 5 est pivotée, depuis la position de fermeture, en direction de la position d'ouverture maximale et atteint une deuxième position prédéterminée.

Selon le mode de réalisation représenté sur les figures 5 et 6, le dispositif d'actionnement 33 comporte un organe d'actionnement 34, tel qu'un doigt d'actionnement, qui est configuré pour actionner directement le contact électrique 32. L'organe d'actionnement 34 est monté mobile en rotation autour de l'axe de pivotement A entre une position d'actionnement dans laquelle l'organe d'actionnement 34 est configuré pour activer le contact électrique 32 et une position de libération dans laquelle l'organe d'actionnement 34 est configuré pour désactiver le contact électrique 32. De façon avantageuse, l'organe d'actionnement 34 est solidaire en pivotement de l'un des bras de liaison 10. Dans le mode de réalisation représenté sur les figures 5 et 6, les première et deuxième positions prédéterminées sont identiques mais pourraient également être différentes selon d'autres modes de réalisation de l'invention non représentés.

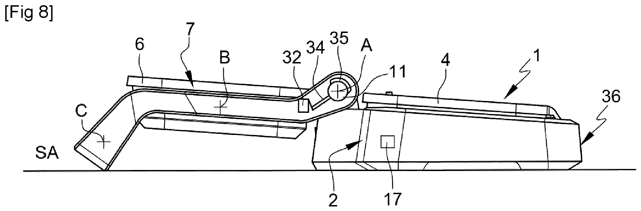

Les figures 7 et 8 représentent une variante du mode de réalisation de l'invention dans laquelle le contact électrique 32 est situé dans l'un des bras de liaison 10.

Selon une telle variante de réalisation, le dispositif d'actionnement 33 comporte un organe d'actionnement 34, tel qu'un doigt d'actionnement par exemple, qui est monté mobile en translation entre une position d'actionnement dans laquelle l'organe d'actionnement 34 est configuré pour activer le contact électrique 32 et une position de libération dans laquelle l'organe d'actionnement 34 est configuré pour désactiver le contact électrique 32. L'organe d'actionnement 34 est solidaire en pivotement de l'un des bras de liaison 10, et est par exemple prévu sur ledit bras de liaison 10. Le dispositif d'actionnement 33 comporte également une came 35 qui est prévue sur la liaison pivot 11 et qui est statique par rapport à la première structure 2. La came 35 est configurée pour déplacer l'organe d'actionnement 34 entre la position d'actionnement et la position de libération lorsque la deuxième structure 5 atteint la première position prédéterminée ou la deuxième position prédéterminée.

Selon le mode de réalisation tel que visible sur les figures 1 à 8, l'interface utilisateur 18 est configurée pour afficher au moins un paramètre d'affichage selon une première orientation lorsque l'appareil de cuisson 1 est dans le premier mode d'utilisation et que la partie de manipulation 9 est dans la première position d'utilisation, et pour afficher l'au moins un paramètre d'affichage selon une deuxième orientation qui est différente de la première orientation, et par exemple inversée, lorsque l'appareil de cuisson 1 est dans le deuxième mode d'utilisation et que la partie de manipulation 9 est dans la deuxième position d'utilisation. Avantageusement, l'interface utilisateur 18 est configurée pour afficher l'au moins un paramètre d'affichage selon la première orientation lorsque le contact électrique 32 occupe le premier état, et est configurée pour afficher l'au moins un paramètre d'affichage selon la deuxième orientation lorsque le contact électrique 32 occupe le deuxième état.

Selon le mode de réalisation tel que visible sur les figures 1 à 8, et plus spécifiquement visible sur la figure 1, l'appareil de cuisson 1 comporte en outre un bac de collecte de jus de cuisson 36. Le bac de collecte de jus de cuisson 36 est configuré pour collecter des jus de cuisson provenant de la première plaque de cuisson 4 ainsi que de la deuxième plaque de cuisson 7. Le bac de collecte de jus de cuisson 36 est disposé en partie sous le premier module de cuisson 3. La première plaque de cuisson 4 comporte une partie de déversement frontale 37 qui est prévue sur un bord avant de la première plaque de cuisson 4 et qui est située verticalement à l'aplomb d'une partie avant du bac de collecte de jus de cuisson 36. La partie de déversement frontale 37 est configurée pour permettre un écoulement par gravité des jus de cuisson provenant de la première plaque de cuisson 4 dans le bac de collecte de jus de cuisson 36.

Selon un mode de réalisation de l'invention non représenté sur les figures, l'appareil de cuisson 1 pourrait comporter en outre une chaine cinématique reliant mécaniquement la partie de manipulation 9 à la liaison pivot 11 et étant configurée de manière à déplacer la partie de manipulation 9 autour de l'axe de rotation C en fonction de la position de la deuxième structure 5 par rapport à la première structure 2. La chaine cinématique pourrait être prévue au moins partiellement dans l'un des bras de liaison 10 et comporter au moins un élément d'entrainement tel qu'une courroie par exemple.

Bien entendu, la présente invention n'est nullement limitée aux modes de réalisation décrits et illustrés qui n'ont été donnés qu'à titres d'exemples.

## Revendications

1. Appareil de cuisson (1) pour la cuisson de produits alimentaires, l'appareil de cuisson (1) comportant :
- une première structure (2) comportant un premier module de cuisson (3) comportant une première plaque de cuisson (4),
- une deuxième structure (5) comportant un deuxième module de cuisson (6) comportant une deuxième plaque de cuisson (7), la deuxième structure (5) comportant en outre une poignée de préhension (8) qui comporte une partie de manipulation (9) configurée pour être manipulée par un utilisateur,
- une liaison pivot (11) reliant la deuxième structure (5) à la première structure (2) et configurée pour permettre un pivotement de la deuxième structure (5) par rapport à la première structure (2) autour d'un axe de pivotement (A) et entre une position de fermeture dans laquelle la première plaque de cuisson (4) et la deuxième plaque de cuisson (7) présentent un écartement minimal, et une position d'ouverture maximale dans laquelle la première plaque de cuisson (4) et la deuxième plaque de cuisson (7) présentent un écartement maximal lorsque l'appareil de cuisson (1) repose sur une surface d'appui (SA),
- une interface utilisateur (18) disposée sur la partie de manipulation (9), et
- une unité de commande configurée pour commander le fonctionnement de l'appareil de cuisson (1),
l'appareil de cuisson (1) présentant un premier mode d'utilisation, dit mode grill, dans lequel un aliment est destiné à être enserré entre les première et deuxième plaques de cuisson, et un deuxième mode d'utilisation, dit mode barbecue, dans lequel chacune des première et deuxième plaques de cuisson est apte à supporter et cuire un aliment respectif,
**caractérisé en ce que** la partie de manipulation (9), qui porte l'interface utilisateur (18), est mobile par rapport au deuxième module de cuisson (6) entre au moins une première position d'utilisation qui est dédiée au premier mode d'utilisation et dans laquelle l'interface utilisateur (18) est accessible pour un utilisateur lorsque l'appareil de cuisson (1) est dans le premier mode d'utilisation, et une deuxième position d'utilisation qui est dédiée au deuxième mode d'utilisation et dans laquelle l'interface utilisateur (18) est accessible pour un utilisateur lorsque l'appareil de cuisson (1) est dans le deuxième mode d'utilisation.

2. Appareil de cuisson (1) selon la revendication 1, dans lequel la partie de manipulation (9) est montée mobile en rotation autour d'un axe de rotation (C).

3. Appareil de cuisson (1) selon la revendication précédente, dans lequel l'axe de rotation (C) de la partie de manipulation (9) est sensiblement parallèle à l'axe de pivotement (A).

4. Appareil de cuisson (1) selon l'une quelconque des revendications précédentes, lequel comporte en outre un système d'indexage (27) configuré de telle sorte que chacune des première et deuxième positions d'utilisation de la partie de manipulation (9) est stable.

5. Appareil de cuisson (1) selon l'une quelconque des revendications précédentes, dans lequel l'interface utilisateur (18) est configurée pour afficher au moins un paramètre d'affichage selon une première orientation lorsque l'appareil de cuisson (1) est dans le premier mode d'utilisation et que la partie de manipulation (9) est dans la première position d'utilisation, et pour afficher l'au moins un paramètre d'affichage selon une deuxième orientation qui est différente de la première orientation, et par exemple inversée, lorsque l'appareil de cuisson (1) est dans le deuxième mode d'utilisation et que la partie de manipulation (9) est dans la deuxième position d'utilisation.

6. Appareil de cuisson (1) selon l'une quelconque des revendications précédentes, lequel comporte en outre un contact électrique (32) configuré pour occuper un premier état lorsque l'appareil de cuisson (1) est dans le premier mode d'utilisation, et configuré pour occuper un deuxième état lorsque l'appareil de cuisson (1) est dans le deuxième mode d'utilisation.

7. Appareil de cuisson (1) selon la revendication précédente, lequel comporte un dispositif d'actionnement (33) configuré pour déplacer le contact électrique (32) dans le premier état lorsque la deuxième structure (5) est pivotée, depuis la position d'ouverture maximale, en direction de la position de fermeture et atteint une première position prédéterminée, et pour déplacer le contact électrique (32) dans le deuxième état lorsque la deuxième structure (5) est pivotée, depuis la position de fermeture, en direction de la position d'ouverture maximale et atteint une deuxième position prédéterminée.

8. Appareil de cuisson (1) selon la revendication 7, dans lequel le dispositif d'actionnement (33) comporte un organe d'actionnement (34) mobile entre une position d'actionnement dans laquelle l'organe d'actionnement (34) est configuré pour activer le contact électrique (32) et une position de libération dans laquelle l'organe d'actionnement (34) est configuré pour désactiver le contact électrique (32).

9. Appareil de cuisson (1) selon l'une quelconque des revendications 6 à 8 en combinaison avec la revendication 5, dans lequel l'interface utilisateur (18) est configurée pour afficher l'au moins un paramètre d'affichage selon la première orientation lorsque le contact électrique (32) occupe le premier état, et est configurée pour afficher l'au moins un paramètre d'affichage selon la deuxième orientation lorsque le contact électrique (32) occupe le deuxième état.

10. Appareil de cuisson (1) selon l'une quelconque des revendications précédentes, dans lequel, lorsque la première structure (2) repose sur une surface horizontale et que la deuxième structure (5) est dans la position d'ouverture maximale, alors la poignée de préhension (8) est en contact avec ladite surface horizontale.

11. Appareil de cuisson (1) selon l'une quelconque des revendications précédentes, dans lequel la deuxième structure (5) est apte à occuper une position d'ouverture intermédiaire qui est stable et située entre la position de fermeture et la position d'ouverture maximale.

## Patentansprüche

1. Kochgerät (1) zum Kochen von Lebensmitteln, wobei das Kochgerät (1) umfasst:
- eine erste Struktur (2), die ein erstes Kochmodul (3) umfasst, das eine erste Kochplatte (4) umfasst,
- eine zweite Struktur (5), die ein zweites Kochmodul (6) umfasst, das eine zweite Kochplatte (7) umfasst, wobei die zweite Struktur (5) weiter einen Greifgriff (8) umfasst, der einen Bedienteil (9) umfasst, der so konfiguriert ist, dass er von einem Benutzer bedient werden kann, - eine Schwenkverbindung (11), die die zweite Struktur (5) mit der ersten Struktur (2) verbindet und so konfiguriert ist, dass sie ein Schwenken der zweiten Struktur (5) in Bezug auf die erste Struktur (2) um eine Schwenkachse (A) und zwischen einer Schließposition, in der die erste Kochplatte (4) und die zweite Kochplatte (7) einen minimalen Abstand aufweisen, und einer maximalen Öffnungsposition ermöglicht, in der die erste Kochplatte (4) und die zweite Kochplatte (7) einen maximalen Abstand aufweisen, wenn das Kochgerät (1) auf einer Auflagefläche (SA) ruht,
- eine Benutzerschnittstelle (18), die am Bedienteil (9) angeordnet ist, und
- eine Steuereinheit, die so konfiguriert ist, dass sie den Betrieb des Gargeräts (1) steuert,
wobei das Kochgerät (1) einen ersten Betriebsmodus, den sogenannten Grillmodus, in dem ein Lebensmittel bestimmungsgemäß zwischen der ersten und der zweiten Kochplatte eingeklemmt wird, und einen zweiten Betriebsmodus, den sogenannten Barbecue-Modus, aufweist, in dem jede der ersten und der zweiten Kochplatte ein jeweiliges Lebensmittel tragen und kochen kann,
**dadurch gekennzeichnet, dass** der Bedienteil (9), der die Benutzerschnittstelle (18) trägt, in Bezug auf das zweite Kochmodul (6) zwischen mindestens einer ersten Betriebsposition, die dem ersten Betriebsmodus gewidmet ist und in der die Benutzerschnittstelle (18) für einen Benutzer zugänglich ist, wenn sich das Kochgerät (1) im ersten Betriebsmodus befindet, und einer zweiten Betriebsposition beweglich ist, die dem zweiten Betriebsmodus gewidmet ist und in der die Benutzerschnittstelle (18) für einen Benutzer zugänglich ist, wenn sich das Kochgerät (1) im zweiten Betriebsmodus befindet.

2. Kochgerät (1) nach Anspruch 1, wobei der Bedienteil (9) um eine Drehachse (C) drehbeweglich angebracht ist.

3. Kochgerät (1) nach dem vorstehenden Anspruch, wobei die Drehachse (C) des Bedienteils (9) im Wesentlichen zur Schwenkachse (A) parallel ist.

4. Kochgerät (1) nach einem der vorstehenden Ansprüche, das weiter ein Indexierungssystem (27) umfasst, das derart konfiguriert ist, dass jede der ersten und der zweiten Betriebsposition des Bedienteils (9) stabil ist.

5. Kochgerät (1) nach einem der vorstehenden Ansprüche, wobei die Benutzerschnittstelle (18) so konfiguriert ist, dass sie mindestens einen Anzeigeparameter in einer ersten Ausrichtung anzeigt, wenn sich das Kochgerät (1) im ersten Betriebsmodus befindet und sich der Bedienteil (9) in der ersten Betriebsposition befindet, und den mindestens einen Anzeigeparameter in einer zweiten Ausrichtung anzeigt, die sich von der ersten Ausrichtung unterscheidet und zum Beispiel invertiert ist, wenn sich das Kochgerät (1) im zweiten Betriebsmodus befindet und sich der Bedienteil (9) in der zweiten Betriebsposition befindet.

6. Kochgerät (1) nach einem der vorstehenden Ansprüche, das weiter einen elektrischen Kontakt (32) umfasst, der so konfiguriert ist, dass er einen ersten Zustand einnimmt, wenn sich das Kochgerät (1) im ersten Betriebsmodus befindet, und so konfiguriert ist, dass er einen zweiten Zustand einnimmt, wenn sich das Kochgerät (1) im zweiten Betriebsmodus befindet.

7. Kochgerät (1) nach dem vorstehenden Anspruch, das eine Betätigungsvorrichtung (33) umfasst, die so konfiguriert ist, dass sie den elektrischen Kontakt (32) in den ersten Zustand verlagert, wenn die zweite Struktur (5) aus der maximalen Öffnungsposition in Richtung der Schließposition geschwenkt wird und eine erste vorbestimmte Position erreicht, und den elektrischen Kontakt (32) in den zweiten Zustand verlagert, wenn die zweite Struktur (5) aus der Schließposition in Richtung der maximalen Öffnungsposition geschwenkt wird und eine zweite vorbestimmte Position erreicht.

8. Kochgerät (1) nach Anspruch 7, wobei die Betätigungsvorrichtung (33) ein Betätigungsglied (34) umfasst, das zwischen einer Betätigungsposition, in der das Betätigungsglied (34) so konfiguriert ist, dass es den elektrischen Kontakt (32) aktiviert, und einer Freigabeposition beweglich ist, in der das Betätigungsglied (34) so konfiguriert ist, dass es den elektrischen Kontakt (32) deaktiviert.

9. Kochgerät (1) nach einem der Ansprüche 6 bis 8 in Kombination mit Anspruch 5, wobei die Benutzerschnittstelle (18) so konfiguriert ist, dass sie den mindestens einen Anzeigeparameter in der ersten Ausrichtung anzeigt, wenn der elektrische Kontakt (32) den ersten Zustand einnimmt, und so konfiguriert ist, dass sie den mindestens einen Anzeigeparameter in der zweiten Ausrichtung anzeigt, wenn der elektrische Kontakt (32) den zweiten Zustand einnimmt.

10. Kochgerät (1) nach einem der vorstehenden Ansprüche, wobei der Greifgriff (8) mit der horizontalen Fläche in Kontakt steht, wenn die erste Struktur (2) auf einer horizontalen Fläche ruht und die zweite Struktur (5) die maximale Öffnungsposition einnimmt.

11. Kochgerät (1) nach einem der vorstehenden Ansprüche, wobei die zweite Struktur (5) eine Zwischenöffnungsposition einnehmen kann, die stabil ist und sich zwischen der Schließposition und der maximalen Öffnungsposition befindet.

## Claims

1. Cooking appliance (1) for cooking food products, the cooking appliance (1) comprising:
- a first structure (2) comprising a first cooking module (3) comprising a first cooking plate (4),
- a second structure (5) comprising a second cooking module (6) comprising a second cooking plate (7), the second structure (5) further comprising a handle (8) which comprises a handling part (9) configured to be handled by a user, - a pivot connection (11) connecting the second structure (5) to the first structure (2) and configured to enable a pivoting of the second structure (5) with respect to the first structure (2) about a pivot axis (A) and between a closing position in which the first cooking plate (4) and the second cooking plate (7) have a minimum spacing, and a maximum opening position in which the first cooking plate (4) and the second cooking plate (7) have a maximum spacing when the cooking appliance (1) rests on a support surface (SA),
- a user interface (18) disposed on the handling part (9), and
- a control unit configured to control the operation of the cooking appliance (1),
the cooking appliance (1) having a first use mode, called grill mode, in which a food is intended to be inserted between the first and second cooking plates, and a second use mode, called barbecue mode, in which each of the first and second cooking plates is capable of supporting and cooking a respective food,
**characterised in that** the handling part (9), which carries the user interface (18), is movable with respect to the second cooking module (6) between at least one first use position which is dedicated to the first use mode, and in which the user interface (18) is accessible for a user when the cooking appliance (1) is in the first use mode, and a second use position which is dedicated to the second use mode, and in which the user interface (18) is accessible for a user when the cooking appliance (1) is in the second use mode.

2. Cooking appliance (1) according to claim 1, wherein the handling part (9) is movably mounted about an axis of rotation (C).

3. Cooking appliance (1) according to the preceding claim, wherein the axis of rotation (C) of the handling part (9) is substantially parallel to the pivot axis (A).

4. Cooking appliance (1) according to any one of the preceding claims, which further comprises an indexing system (27) configured such that each of the first and second use positions of the handling part (9) is stable.

5. Cooking appliance (1) according to any one of the preceding claims, wherein the user interface (18) is configured to display at least one display parameter along a first orientation when the cooking appliance (1) is in the first use mode and when the handling part (9) is in the first use position, and to display the at least one display parameter along a second orientation which is different from the first orientation, and for example inverted, when the cooking appliance (1) is in the second use mode and when the handling part (9) is in the second use position.

6. Cooking appliance (1) according to any one of the preceding claims, which further comprises an electric contact (32) configured to occupy a first state when the cooking appliance (1) is in the first use mode, and configured to occupy a second state when the cooking appliance (1) is in the second use mode.

7. Cooking appliance (1) according to the preceding claim, which comprises an actuation device (33) configured to move the electric contact (32) in the first state when the second structure (5) is pivoted, from the maximum opening position, in the direction of the closing position and reaches a first predetermined position, and to move the electric contact (32) in the second state when the second structure (5) is pivoted, from the closing position, in the direction of the maximum opening position and reaches a second predetermined position.

8. Cooking appliance (1) according to claim 7, wherein the actuation device (33) comprises an actuation member (34) which is movable between an actuation position in which the actuation member (34) is configured to activate the electric contact (32) and a release position in which the actuation member (34) is configured to deactivate the electric contact (32).

9. Cooking appliance (1) according to any one of claims 6 to 8 combined with claim 5, wherein the user interface (18) is configured to display the at least one display parameter along the first orientation when the electric contact (32) occupies the first state, and is configured to display the at least one display parameter along the second orientation when the electric contact (32) occupies the second state.

10. Cooking appliance (1) according to any one of the preceding claims, wherein, when the first structure (2) rests on a horizontal surface and when the second structure (5) is in the maximum opening position, then the handle (8) is in contact with said horizontal surface.

11. Cooking appliance (1) according to any one of the preceding claims, wherein the second structure (5) is capable of occupying an intermediate opening position which is stable and located between the closing position and the maximum opening position.
